# EUROPEAN PATENT SPECIFICATION

(11) **EP 1 683 989 B1**
(45) Date of publication and mention of the grant of the patent: **28.03.2012**
(21) Application number: 05001361.4
(22) Date of filing: 24.01.2005
(51) Int. Cl.: F16H 15/50

(54) **Synchronizer**
Synchronisiereinrichtung
Synchroniseur

(43) Date of publication of application: 26.07.2006
(60) Divisional application: 09166244.5
(73) Proprietor: Al Khalaf, Yousif Saleh Rasheed, Riyadh 11458 (SA)
(72) Inventor: Al Khalaf, Yousif Saleh Rasheed, Riyadh 11458 (SA)
(74) Representative: Viering, Jentschura & Partner

(56) References cited:
- EP-A- 1 197 680
- US-A- 3 606 801

## Description

### General description of the design

The present invention aims at solving previous hindrances caused by the compressional coaxial method of the two funnels, arms, and two springs, providing wide adaptation with suitable loads. The velocity, power and torque are being synchronized, i.e. equalized for a dependent member and a leading member through the whole system, intending to detach the leading member from the dependent member through the separating clutch of the bisecting ball.

The closest prior art is known from EP-A-1197680 which shows a device having a first rotatable axle, a second rotatable axle, an annular part arranged on the second axle, a first, inner funnel, a second, outer funnel, the second, outer funnel being coaxial with respect to the first, inner funnel, wherein the first funnel extends into the second funnel. The device is provided for speed variation.

The present invention which is directed to a device for equalizing velocity, torque and power in movable machines is defined by all of the features of claim 1.

### Description of the drawings:

The specifications and features of the present invention will be better understood through the description of the drawings 1/12: shows two interconnected funnels (3) (4) and the axle of the leading member upon which the two funnels rest, as the first being connected to it while the other is detached or movable. In addition, the figure shows the grooves of the two internal funnels and the direction of the two posts of the back axle passing through the two grooves of the internal funnel that draws back to the returning of its two front posts (7) and its grooves.
12/ 2 : The shape of the external funnel (3) connected to its internal axle with the leading member at its top, the shape of its grooves (22) and being inclined, the internal funnel (4) and its helical grooves (5) directing opposite the grooves of the first (5) which is helicoid in shape while the other is crescent- shaped(22). Even the detached axle and contacted to the front axle to be free. The back arms connected to the internal funnel at the end (12) and the opposing springs (11) for each of the group of front arms connected to the funnel and the back ones connected to the axle (6) of the two posts inside the grooves of the second funnel, from behind the back axle of the figure.

The springs are opposing to each other and connected as well, as shown in figure (11) as a whole.
12/3 : Arms connected to the back axle (12) and front funnel (12) which is connected to grooves of that two posts of the back and front funnels which are disconnected as shown in the figure, to face one direction only (13). **sprocket wheel** which makes internal funnel fixed in the first position, while the leading member is s or almost as the said proportion the lead member, the figure shows the phase start after the compressional interference, according to the release power and turning power, etc.
12/4 : the figure illustrates posts, arms, springs, and **Sproket wheel**(12) (11) (13), while the last one is facing mechanically one direction and releases in the opposite. Thus it helps in transferring power, velocity and torque at the same time which makes release easy to return to the normal position of the shape, even in the high and increased velocity, torque and power. The back rest and the back axle of the arms (12) and springs (11) in the back axle (14) which provides balance and productivity of the figure as a whole in terms of velocity, torque, and power from the leading member and the dependent one, and vice versa. Besides, the bisecting ball or the separating holding member is shown, while being with three springs in the middle, and by releasing its two front and back covers with the motion fork (16) and back spring (17) and even a metal piece (24) behind the spring and being connected to the fork and surrounds the axle behind the bisecting ball or the separating holding member.
12/ 5 : On returning the fork (16) the tandem member (24) of the spring, which is connected to the fork retreats back, thus the back cover retreats back extending the three springs of the bisecting ball. Thus the front cover disconnects from the two members (top and lower) of the bisecting ball and from the cover of the back axle, which constitutes the start phase as in A. When the fork (16) is released the back spring (17) extends so that the back cover (20) presses the bisecting ball (19). Till the start of the proportion of the dependent member of the leading one 0 s 1 to 1≤ 1 or 0.9 s 1> . Between that and to B, C. of the returning of the back funnel towards the grooves of the front funnel and the two posts connected to it, which turns and the back funnel returns back through the grooves of the motion of the back axle through the resting posts of the figure. Thus the arms and springs return back (not shown). Even the spiral stationary is 1≤ 1 H, 0.9 s 1 of the shape of the spring when released to its previous state D even in the motion state.
12/ 6: the figure as a whole, and as we described before, with three locations of the bearing (21) in the middle and in the back.
12/ 7: the figure shows a perspective view of the whole invention except the separating clutch and shows the turning direction of the leading member of the led member, and the preferred turning as to the direction of the grooves and the direction of the two springs of the back arms.
12/8: The lubrication is only for the front section only by spraying to cover the whole system and its motion (28) through an oil level less than ½ of the vacuum space and the hub of the bolt of changing oil is shown.
12/9 : the cover of the back bisecting ball (20) and the grooves axle and the protrusions facing in one free direction, with coaxial turning following the torque, power and velocity (27) in the grooves and protrusions of the internal axle (26) and the protrusions, and the internal grooves opposing entering (27) in (26) and of the turning of the torque, velocity and power and with freely to release the cover of the bisecting ball.
12/ 10: the figure illustrates the cavity of the cover of the bisecting ball and the control fork in the separating clutch (16) and even the tandem member (24) that moves the back spring in middle of which is the back axle (27) and (26) and the back bearing (25).
12/ 11: the bisecting ball into two halves (19) inside of which is the three springs, which releases and expands when detached, and being compressed through the two front and back covers when connected to the separator clutch.
12/ 12: the figure shows a drawing of the configuration of the clutch separating the bisecting ball, in which the front cover (20) and back cover (26) of the internal cavity of the bisecting ball or the cover (20) and (17). The spring surrounding the core of the back axle (27) which is connected to the bearing (25)., while the later is connected to the box's body. The figure also shows a front vies of the bisecting ball being connected to the back axle (14) of the timing instrument through a middle separating bearing (23). The appendices of the drawing show the bisecting ball while expanding, detaching and compressing the spring (17). While the other drawing shows the bisecting ball while compressing and expanding the spring (17)

### Detailed description:

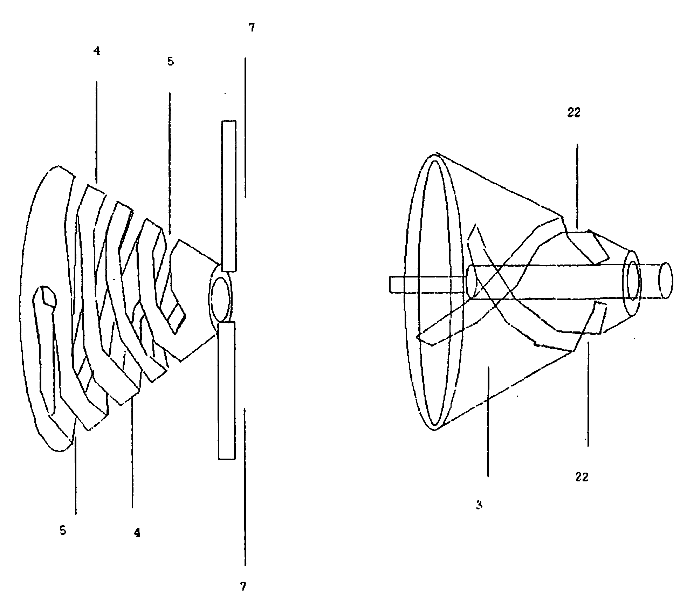

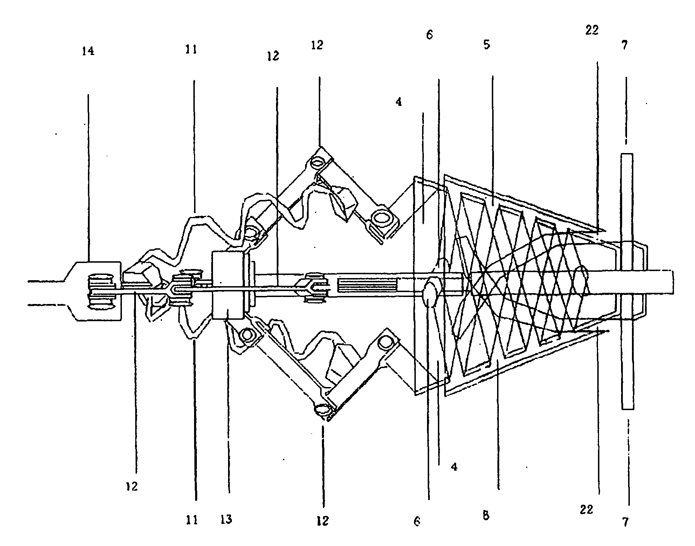

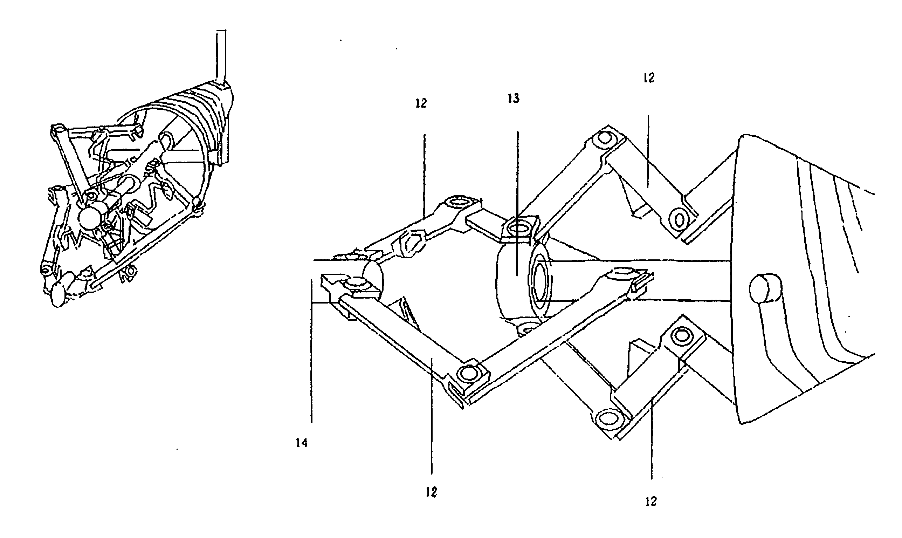

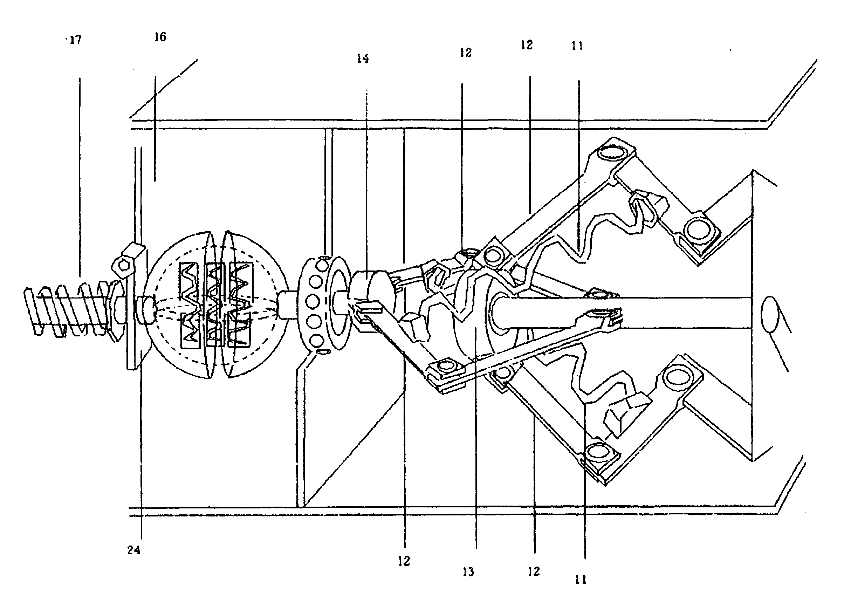

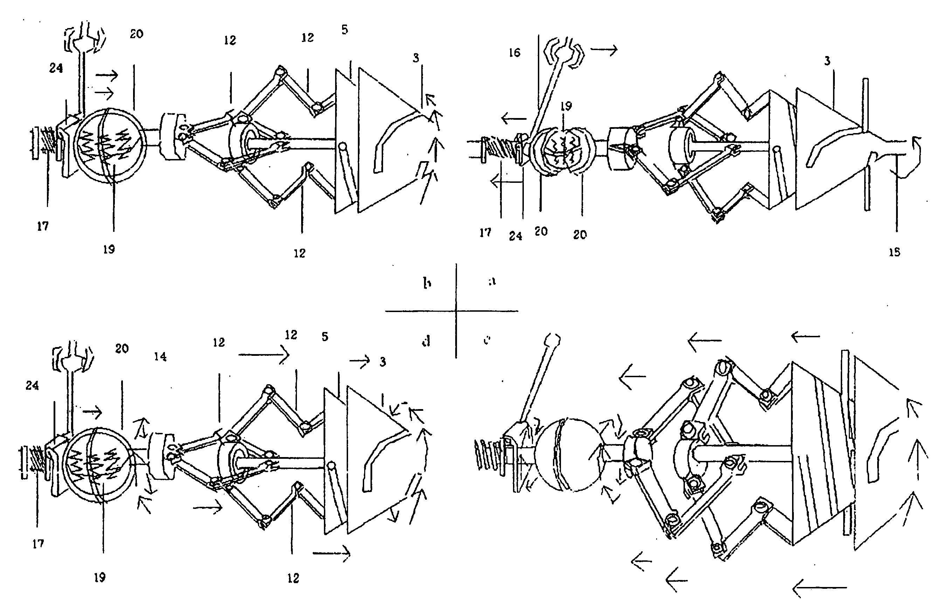

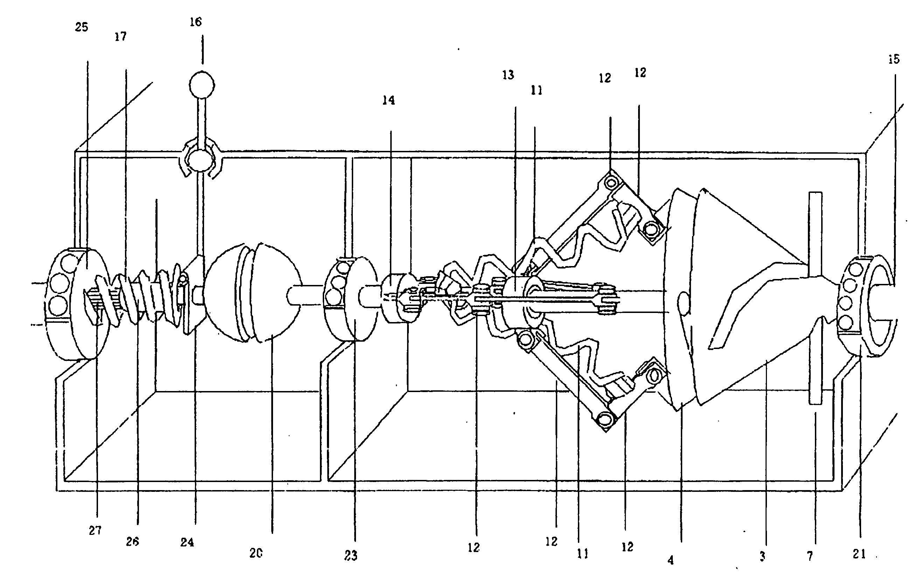

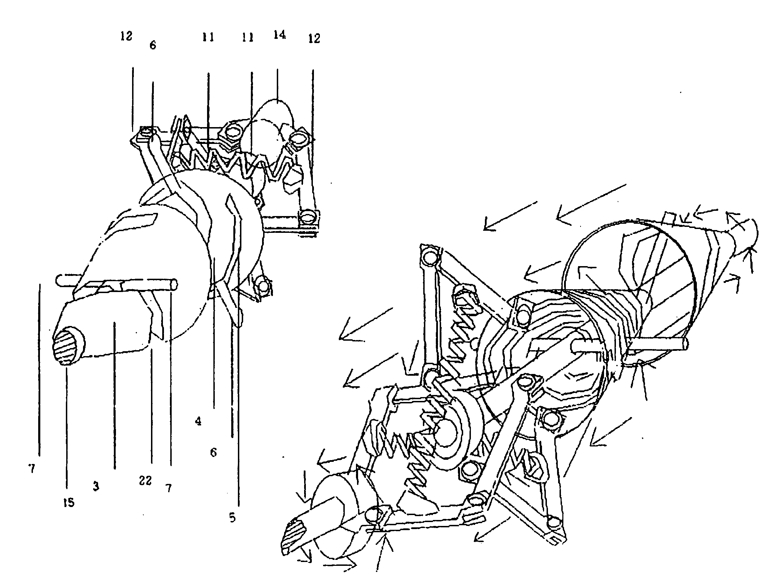

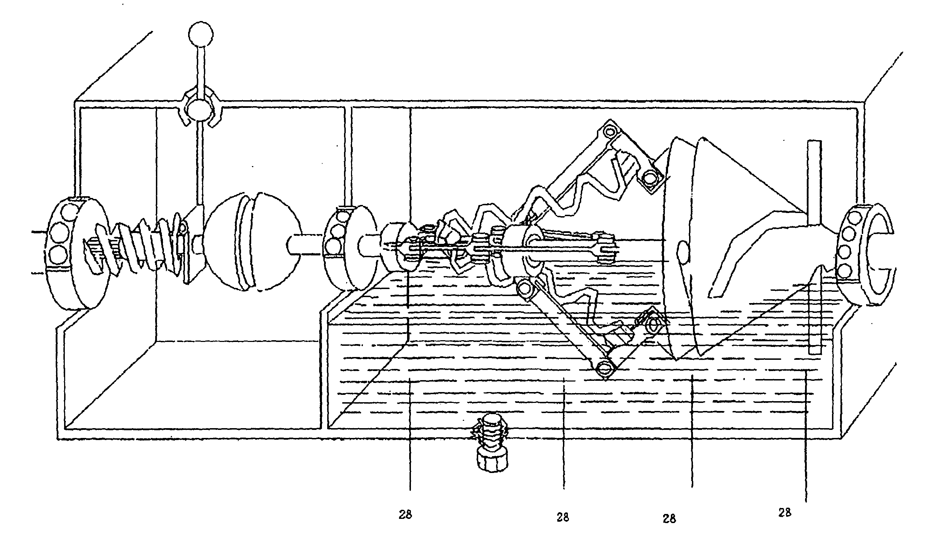

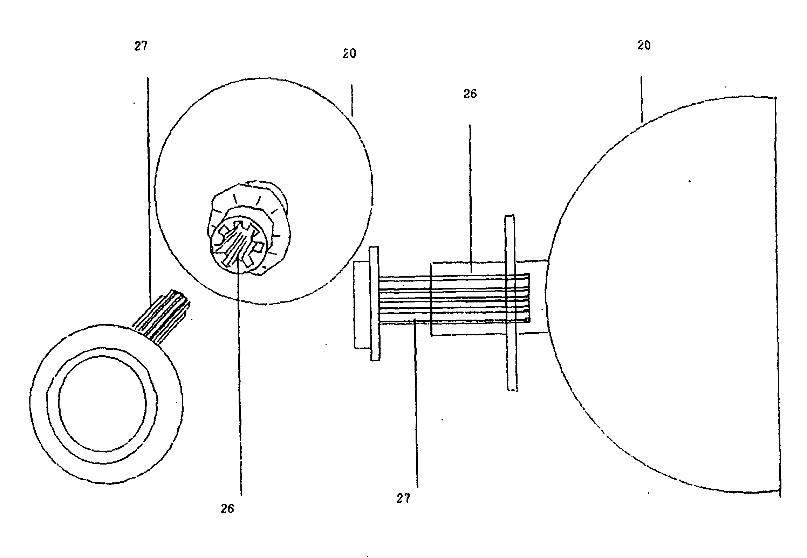

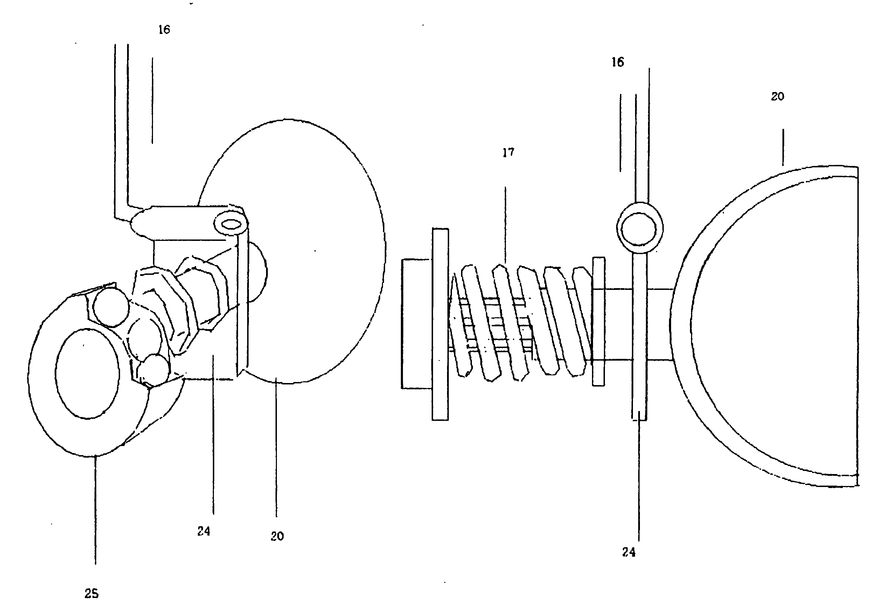

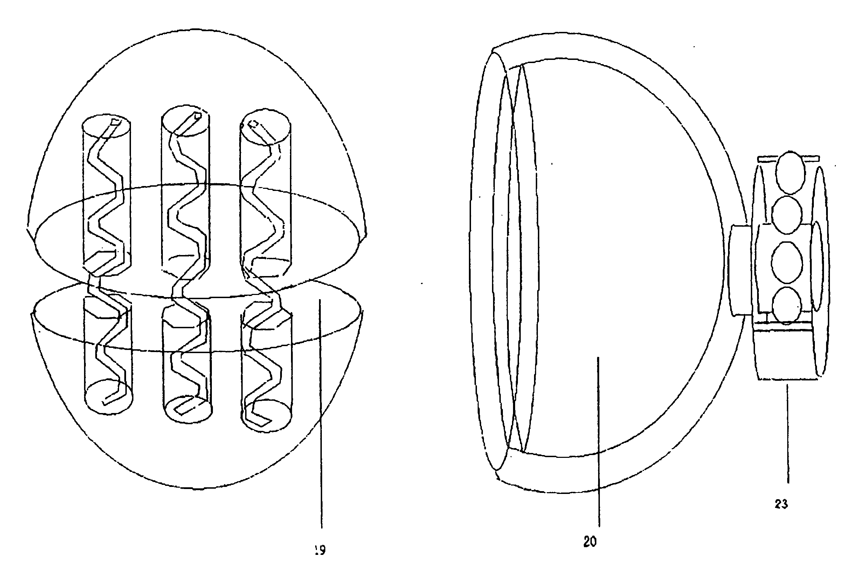

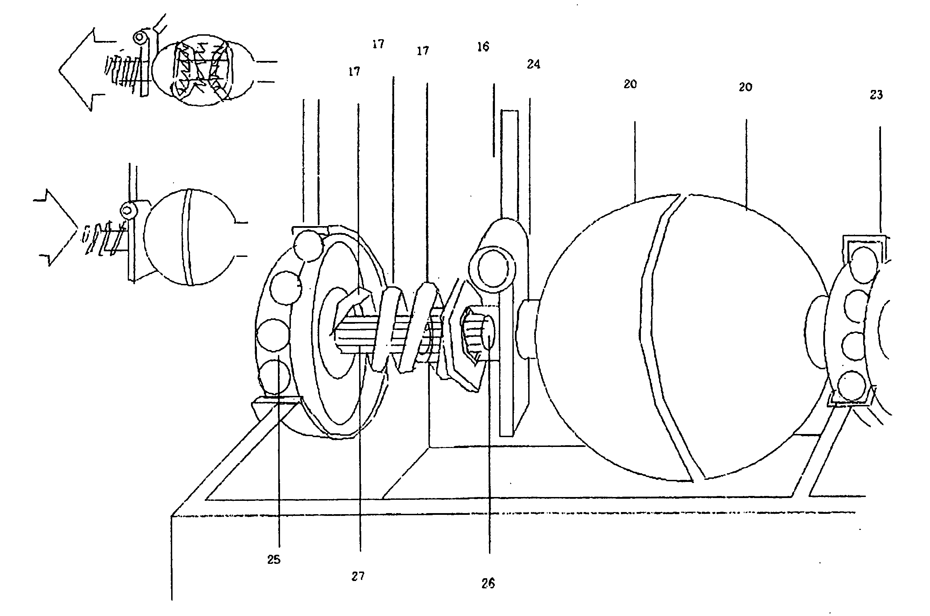

The figures show three locations (21) (23) (25) of a bearing to help the balance of the design as a whole, fix the compressionalbility and its returning back. When the leading member turns towards the front bearing (21) the front funnel (3) turns and directs its grooves (22) of the two posts of the internal funnel (7) to return back, through which it moves the two posts of the back compressoinal axle (6) through the two grooves of the internal funnel (5), 12/ 1, till they are synchronized, i.e. to be equaled in (power, velocity, torque). While in the figure the arms with their springs 12/ 6 quasi-perpendicular providing a potential power stress to return in another phase. The medium bearing (23) which helps fixing the returning of the interrelated arms and compressing them as a whole while being separated by the separating clutch (19), the work of which was explained earlier on the
Occasion of specifying the velocity of the dependent member and torque.
SPROKET WHEEL (13) in returning the funnel inward (4) into its position through release of compressional member of arms and loosening the member among the two posts of the axle and two grooves of the internal funnel (5) and helps the two springs (11), figure 12/4 and release them in phase D, as in the figure to complete the following phases 12/5 as to the bearing (23).
12/ 6 : of the metal member (24) close to the back bearing (25) to withstand the stress of the spring when disconnecting the separating clutch (19). Any change in size, form, configuration, description, ratios, method of installation, operation, or usage will be clear for those who are skilled in the art.

## Claims

1. Device for equalizing velocity, torque and power in movable machines, the device having
- a first rotatable axle,
- a second rotatable axle,
- an annular part arranged on the second axle,
- a first, inner funnel (**4**),
- a second, outer funnel (**3**), the second, outer funnel (**3**) being coaxial with respect to the first, inner funnel (**4**), wherein the first funnel (**4**) extends into the second funnel (3),
- two first arms (12) **articulated with each other and articulatedly** connected to said first axle and said second axle, **respectively, so as to allow relative axial displacement of said first and second axles,**
- two second arms **articulated with each other and articulatedly** connected to said annular part and said first, inner funnel **(4), respectively, so as to allow relative axial displacement of said annular part and the first, inner funnel (4)**, and
- two first springs (11) connecting said two first arms (12) to said two second arms, wherein
the first (**4**) and the second (**3**) funnels are provided with grooves (5, 22) and the first (**4**) and the second (**3**) funnels are interconnected,
the device further comprises posts (6, 7) for engaging the grooves (5),
the groove (5) or grooves (5) of the first funnel (**4**) is/are helical,
the grooves (22) of the second funnel (**3**) are crescent-shaped grooves directed opposite with regard to the helical grooves of the first funnel (4),
two first posts (6) of said posts (6, 7) engage said helical groove or grooves (5), with said first posts (6) connected to said second axle,
two second posts (7) of said posts (6, 7) are connected to the axial end of the first funnel, which end faces the second funnel, and engage said crescent-shaped grooves (6),
wherein the first, inner funnel (**4**) is axially movable with regard to the second, outer funnel (**3**).

## Patentansprüche

1. Vorrichtung zum Ausgleichen von Geschwindigkeit, Drehmoment und Kraft in bewegbaren Maschinen, wobei die Vorrichtung aufweist:
- eine erste drehbare Achse,
- eine zweite drehbare Achse,
- einen ringförmigen Teil, der an der zweiten Achse angeordnet ist,
- einen ersten, inneren Trichter (4),
- einen zweiten, äußeren Trichter (3), wobei der zweite, äußere Trichter (3) bezüglich des ersten, inneren Trichters (4) koaxial ist, wobei sich der erste Trichter (4) in den zweiten Trichter (3) erstreckt,
- zwei erste Arme (12), die gelenkig miteinander gelagert sind und gelenkig mit der ersten Achse beziehungsweise mit der zweiten Achse verbunden sind, um eine relative Axialverschiebung der ersten und der zweiten Achse zu ermöglichen,
- zwei zweite Arme, die gelenkig miteinander gelagert sind und gelenkig mit dem ringförmigen Teil beziehungsweise dem ersten, inneren Trichter (4) verbunden sind, um eine relative Axialverschiebung des ringförmigen Teils und des ersten, inneren Trichters (4) zu ermöglichen, und
- zwei erste Federn (11), die die beiden ersten Arme (12) mit den beiden zweiten Armen verbinden, wobei:
der erste (4) und der zweite (3) Trichter mit Nuten (5, 22) versehen sind und der erste (4) und der zweite (3) Trichter miteinander verbunden sind,
die Vorrichtung ferner Stifte (6, 7) für einen Eingriff mit den Nuten (5) aufweist,
die Nut (5) oder die Nuten (5) des ersten Trichters (4) spiralförmig ist/sind,
die Nuten (22) des zweiten Trichters (3) sichelförmige Nuten sind, die bezüglich der spiralförmigen Nuten des ersten Trichters (4) entgegengesetzt ausgerichtet sind,
zwei erste Stifte (6) der Stifte (6, 7) die spiralförmige Nut oder Nuten (5) mit den ersten Stiften (6) in Eingriff bringen, die mit der zweiten Achse verbunden sind,
zwei zweite Stifte (7) der Stifte (6, 7) mit dem axialen Ende des ersten Trichters verbunden sind, wobei das Ende dem zweiten Trichter zugewandt ist, und mit den sichelförmigen Nuten (6) in Eingriff sind,
wobei der erste, innere Trichter (4) bezüglich des zweiten, äußeren Trichters (3) axial bewegbar ist.

## Revendications

1. Dispositif destiné à égaliser la vitesse, le couple et la puissance dans des machines mobiles, le dispositif présentant :
- un premier axe rotatif;
- un second axe rotatif ;
- une partie annulaire agencée sur le second axe ;
- un premier entonnoir intérieur (4);
- un second entonnoir extérieur (3), le second entonnoir extérieur (3) étant coaxial par rapport au premier entonnoir intérieur (4), dans lequel le premier entonnoir (4) s'étend dans le second entonnoir (3) ;
- deux premiers bras (12) articulés l'un par rapport à l'autre et reliés de manière articulée audit premier axe et audit second axe, respectivement, de façon à permettre un déplacement axial relatif desdits premier et second axes ;
- deux seconds bras articulés l'un par rapport à l'autre et reliés de manière articulée à ladite partie annulaire et audit premier entonnoir intérieur (4), respectivement, de façon à permettre un déplacement axial relatif de ladite partie annulaire et dudit premier entonnoir intérieur (4) ; et
- deux premier ressorts (11) qui relient lesdits deux premiers bras (12) auxdits deux seconds bras ; dans lequel :
les premier (4) et second (3) entonnoirs sont dotés de rainures (5, 22) et les premier (4) et second (3) entonnoirs sont reliés ensemble ;
le dispositif comprend en outre des montants (6, 7) destinés à venir en prise avec les rainures (5),
la rainure (5) ou les rainures (5) du premier entonnoir (4) sont hélicoïdales ;
les rainures (22) du second entonnoir (3) sont des rainures en forme de croissant dirigées de manière opposée par rapport aux rainures hélicoïdales du premier entonnoir (4) ;
deux premiers montants (6) desdits montants (6, 7) viennent en prise avec ladite ou avec lesdites rainures hélicoïdales (5), lesdits premiers montants (6) étant reliés audit second axe ;
deux seconds montants (7) desdits montants (6, 7) sont reliés à l'extrémité axiale du premier entonnoir, laquelle extrémité fait face au second entonnoir, et viennent en prise avec lesdites rainures en forme de croissant (6) ;
dans lequel le premier entonnoir intérieur (4) est axialement mobile par rapport au second entonnoir extérieur (3).
